Europäisches Patentamt

European Patent Office

Office européen des brevets

(11) Publication number: **0 042 337**
**B1**

## EUROPEAN PATENT SPECIFICATION

(45) Date of publication of patent specification: **12.03.86**

(21) Application number: **81400940.3**

(22) Date of filing: **15.06.81**

(51) Int. Cl.⁴: **G 01 N 35/06**

(54) **Method and apparatus for metering biological fluids.**

(30) Priority: **16.06.80 US 159563**

(43) Date of publication of application:
**23.12.81 Bulletin 81/51**

(45) Publication of the grant of the patent:
**12.03.86 Bulletin 86/11**

(84) Designated Contracting States:
**DE FR GB**

(56) References cited:
**FR-A-2 123 593**
**US-A-3 748 911**
**US-A-3 832 135**
**US-A-3 866 476**
**US-A-3 988 921**
**US-A-4 041 995**
**US-A-4 142 656**

(73) Proprietor: **EASTMAN KODAK COMPANY**
**343 State Street**
**Rochester New York 14650 (US)**

(72) Inventor: **Collins, Richard Alvin**
**901 Elmgrove Road**
**Rochester New York (US)**
Inventor: **Tersteeg, Glenn Edward**
**901 Elmgrove Road**
**Rochester New York (US)**
Inventor: **Jessop, Thomas Clifton**
**Kodak Park**
**Rochester New York (US)**

(74) Representative: **Mestre, Jean et al**
**Kodak-Pathé Département des Brevets et**
**Licences 30, rue des Vignerons B.P. 60**
**F-94302 Vincennes Cedex (FR)**

Courier Press, Leamington Spa, England.

## Description

The present invention relates to the chemical analysis of substances, and more particularly to a method and apparatus for the precise metering of biological fluids onto generally planar test elements.

A number of automated systems have been developed for performing quantitative chemical analyses of sample fluids. Most of the commercially-available systems utilize liquid reagents and require analyzer equipment having intricate solution handling and transport capabilities. Recent developments, however, have provided test elements in essentially planar, dry form which can be loaded into a cartridge for use in an analyzer. In the use of such an analyzer, a test element from a cartridge is fed into a metering station where a predetermined amount of sample fluid is deposited on the test element. After an incubation period, the element is moved to a read station where a change in the test element is measured, the amount of change being proportional to a particular analyte in the fluid. The test element is used only once and is discarded after the reading has been taken. An analyzer for use with such test elements is disclosed in U.S. Patent Specification No. 4,152,390.

Test elements of the type described above are adapted to function with very small quantities of sample fluid. For example, test elements for performing colorimetric analyses can produce a measurable response with only 10 microliters of sample fluid, and elements for performing potentiometric analyses are operable with 10 microliters of sample fluid and 10 microliters of reference fluid. The volume of fluid supplied to the elements should preferably not vary more than 5% from a selected value to achieve desirable test results. Thus, there is a problem in providing a metering device which can deliver precise micro quantities of fluid, in spite of variations in the physical properties of the fluid and the test elements. Moreover, in high-throughput analyzers, the metering device must be capable of repeatedly and accurately dispensing such quantities of fluid onto the test elements as they are sequentially moved into a metering station.

A metering device for use with planar test elements is shown in U.S. Patent Specification Nos. 4,041,995 and 4,142,656 which is considered as the closest reference. In these specifications, fluid is dispensed from a sample cup having a dispensing tip formed on a bottom wall thereof. An electrically-actuated pump is used to generate a pressure in the cup sufficiently above ambient to form a pendant drop on the dispensing tip. The test element is then moved into contact with the pendant drop to effect a transfer of the fluid to the element. Both the sample cup and the test element are transported to · the metering apparatus. Such metering devices require complex transport and drive elements for both the sample cup and the test element, and it is not intended for use in applications where fluid must be aspirated into the metering device.

U.S. Patent Specification No. 3,832,135, discloses a metering device which is adapted to pick up a disposable tip, aspirate fluid into the tip, meter fluid into a receptacle, and eject the tip. U.S. Patent Specification No. 3,832,135, however, does not disclose the metering of fluids onto a series of analysis slides.

U.S. Patent Specification No. 3,988,921, shows apparatus for dispensing fluid through a capillary tube onto a chromatographic plate; in this apparatus, the capillary tube is loaded with a quantity of fluid, and all of the fluid in the tube is dispensed onto a single plate. Since the tube must be reloaded for each new plate, the apparatus would not be suitable for use in a high-throughput analyzer where a series of tests are performed on a single sample fluid. Similar fluid dispensing apparatus is disclosed in French Patent Specification No. 2,123,593, and U.S. Patent Specification No. 3,748,911. None of these prior-art devices is directed to solving the problem of metering, from a relatively large supply of fluid, small volumes of the fluid onto an anlysis slide.

It is an object of the present invention to overcome the above-described problem in prior-art devices, and to provide a method and apparatus for the repeated, precise dispensing of micro quantities of fluid onto test elements for the analysis of biological fluids.

In accordance with the present invention there is provided metering apparatus for precisely metering a predetermined quantity of biological fluid onto a plurality of generally planar analysis slides sequentially moved into a metering station, said slides being selected from more than one type, different types having different rates of fluid absorption. Such apparatus is of the type comprising dispenser means including a metering tip having a fluid chamber for receiving biological fluid, pump means in fluid communication with said metering tip, said pump means being actuatable for a preselected period to expel a precise portion of fluid received by said tip through an aperture in said tip at a substantially constant dispense rate, and positioning means operatively connected to said dispenser means for moving said tip to a metering position adjacent to a slide. The apparatus of the invention is characterized in that said tip comprises an aperture through which the biological fluid is aspirated, said positioning means is adapted to space said tip at a given distance from the slide such that fluid delivered at said dispense rate will flow in a continuous stream to said slide, said positioning means being adapted to withdraw said tip at a controlled rate from said metering position a predetermined time after said period.

In accordance with the present invention there is also provided a process for the precise dispensing of a portion of a biological fluid from a metering tip onto a generally planar anslysis slide the tip being positioned in a metering position closely adjacent the slide, characterized by: aspirating the fluid into said tip until the tip is partially filled with fluid and has an air space above the fluid, selecting a space between the tip and the analysis slide of between about 0.030 cm and about 0.15 cm; pressurizing the air and fluid in the tip for a preselected period to force about 10 µl of fluid onto the slide at a fixed, predetermined dispense rate of between about 33 µl/ sec and about 300 µl/sec, and maintaining said tip in the metering position between about 0.05 second and about 0.5 second after said period and then withdrawing the tip from said metering position.

The disclosed invention is adapted to deliver a relatively small volume of fluid to a slide with satisfactory precision and accuracy, in spite of variations in the types of slides and the physical properties of the fluid. It has been found that the desired precision and accuracy can be achieved by carefully controlling certain properties, including the spacing of the metering tip from the analysis slide, the rate at which the fluid is expelled from the tip, the dwell time of the metering tip in the metering position after the pump stops, and the rate at which the tip is withdrawn from the slide after completion of the metering operation.

Embodiments of the present invention will now be described by way of example, with reference to the accompanying drawings in which:

Fig. 1 is a perspective view of a chemical analyzer of the type which is adapted to employ the present invention;

Fig. 2 is a perspective view of the metering apparatus of the present invention, showing a dispenser and a carriage for the dispenser;

Fig. 3 is a perspective view of a pump for the dispenser and a drive mechanism for the carriage; and

Fig. 4 is an enlarged elevational view, partially in section, showing a metering tip in the metering position over an analysis slide.

The present invention is described hereinafter in connection with an analyzer for performing quantitative chemical analyses of biological fluids, such as blood serum. However, the invention is not so limited, and it can also be employed in other types of apparatus where precise metering devices are required. Although the dispensing of blood sera is described hereinafter by way of example, the apparatus may be used to dispense fluid in any repetitive dispensing operation which requires that the amount of dispensed fluid be uniform in spite of a substantial variation in physical properties of the sample fluid so dispensed.

One form of test element, or analysis slide, for use with the subject invention is disclosed in the U.S. Patent Specification No. 3,992,158. The test element disclosed in this patent specification is formed as a multi-layer element containing the necessary reagents for reaction with components of a biological fluid, such as blood serum, deposited thereon. Certain reactions colorimetrically produce a change in optical density in the element which is sensed by a reflectometer, the amount of light reflected from the element varying in accordance with the reaction and being indicative of the amount of a particular analyte present in the fluid. Another form of test element for use with the disclosed invention is shown in U.S. Patent Specification No. 4,053,381. This patent specification describes a test element, or analysis slide, of the type which is used to potentiometrically designate the activity of ions in a liquid test solution by the use of electrodes.

The different forms of test elements usable with the present invention will vary to some degree in the absorption rates at which they attract fluid metered onto the element; this is due, in part, to a variance in the capillary action in the different forms of elements and to a wicking action between layers in certain elements. Because of this variance in the test elements and variations in the physical properties of the fluids, certain characteristics of applicants' invention, described hereinafter, must be carefully controlled to achieve the desired precision and accuracy.

Terms such as "up," "down," "lower," "vertical," "horizontal," and "bottom," as used herein, refer to the orientation of parts when the disclosed apparatus is its normal operating position.

The sera to be dispensed are to be tested by devices requiring very accurate, small volumes of sera. The volumes to be dispensed are substantially fixed for a particular application and range from 1 to about 30 microliters, and preferably between about 8 and about 13 microliters. Such small volumes permit the performance of multiple tests on a relatively small volume of serum from a patient; in the case of elderly or infant patients, only small volumes of blood are available for testing, and the smaller the volume needed for each test, the greater the number of tests which can be run on a given sample of serum.

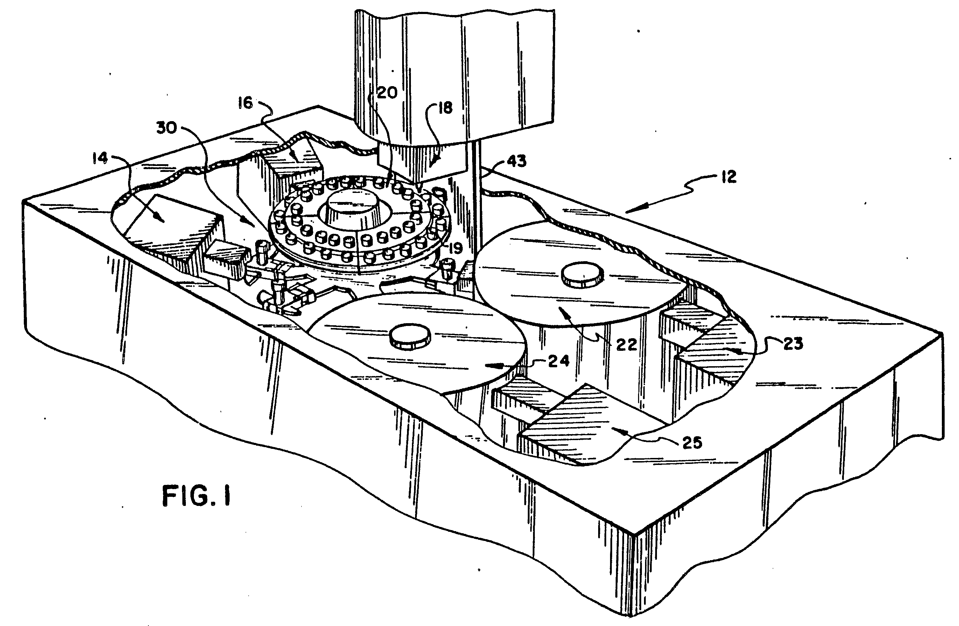

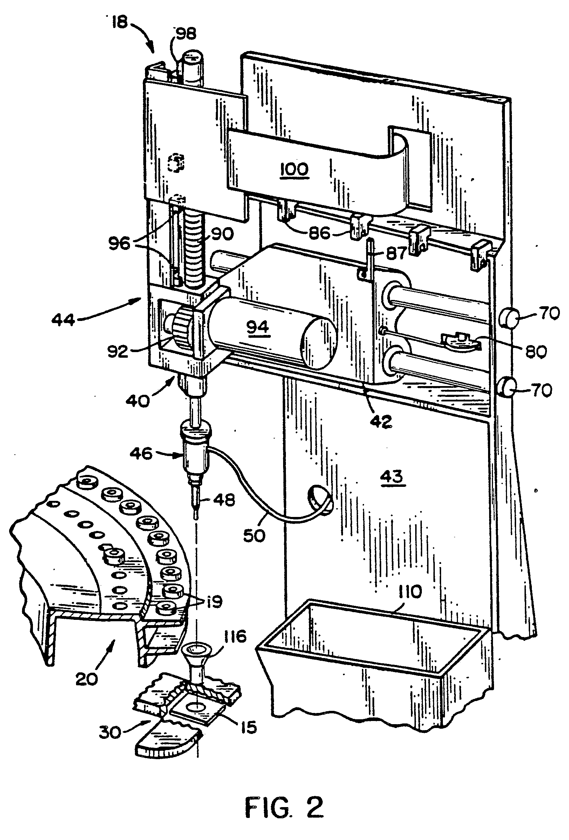

In Fig. 1, there is shown an analyzer 12 of the type which is adapted to employ a metering apparatus 18, described in detail hereinafter. Analyzer 12 comprises a slide supply 14 for analysis slides 15 of the colorimetric type (Fig. 2), and a slide supply 16 for analysis slides of the potentiometric type (not shown). Metering apparatus 18 is adapted to aspirate sample fluid from a cup 19 supported in a sample tray 20 and to deposit a predetermined amount of the fluid onto an analysis slide supported in a slide distributor 30. A second metering device, not shown, works in conjunction with metering apparatus 18 to also deposit reference fluid on analysis slides of the potentiometric type. After the metering operation, analysis slides of the potentiometric type are desposited in an incubator 22 by distributor 30, and analysis slides 15 of the colorimetric type are deposited in an incubator 24. Incubators 22, 24, are adapted to cooperate respectively with analysis means 23, 25, for measuring a change in the analysis slides as a result of the fluids deposited thereon.

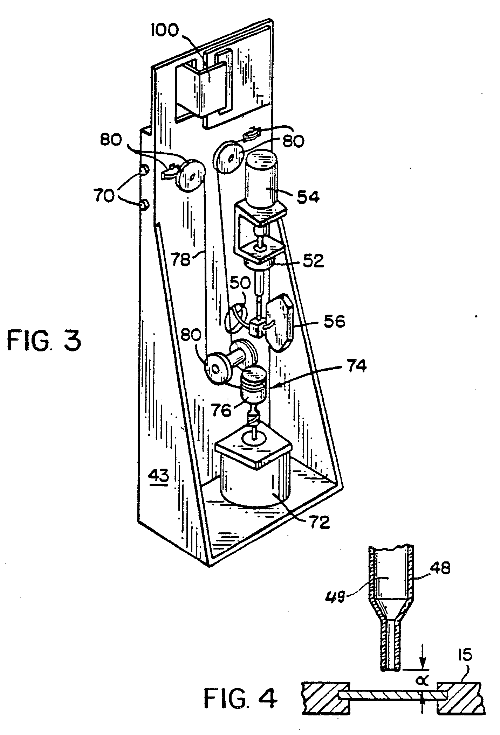

With reference to Fig. 2, metering apparatus 18 comprises a dispenser 40 and a means for positioning dispenser 40 which includes a carriage 42 for moving dispenser 40 laterally through a plurality of stations in analyzer 12; the positioning means for dispenser 40 also includes a vertical drive 44 which is adapted to raise and lower dispenser 40 at each of the stations. Dispenser 40 comprises a dispenser head 46 which is adapted to receive a disposable metering tip 48, and is connected by means of a line 50 to a pump 52 (Fig. 3) of the positive displacement type. Pump 52 comprises a piston, not shown, which is driven by a bidirectional stepper motor 54.

When motor 54 is actuated in one direction, a partial vacuum is created in line 50 by pump 52, and fluid is drawn into the fluid chamber 49 of tip 48. (See Fig. 4.) Motor 54 is actuated in an opposite direction to meter fluid from tip 48. In the metering operation, motor 54 drives pump 52 for a preselected period during which the pressure in line 50 and tip 48 is raised sufficiently to force about 10 µl of fluid onto an analysis slide. Under certain operating conditions, depending on the amount of fluid aspirated into tip 48, it may be desirable to vent line 50 before dispensing fluid onto an analysis slide. A pressure transducer 56 closely monitors pressure in line 50 for purposes which will be explained in more detail hereinafter.

Sample tray 20 is adapted to carry a disposable tip 48 for each of the sample fluids to be analyzed. A new tip 48 is used with each sample fluid to avoid any cross-contamination problems. The cups 19 containing sample fluid are arranged around the outer periphery of tray 20, as shown in Fig. 2. An indexing mechanism, not shown, advances tray 20 at the start of each metering cycle to bring a cup 19 and new tip 48 respectively into an aspiration station and a tip supply station for cooperation with metering apparatus 18. Tips 48 can be formed by known molding techniques from polymers, such as acetal and polypropylene. One tip which is particularly suitable for use in apparatus 18 is the tip described in "Research Disclosure," Vol. 200, December 1980, Publication No. 20023, published by Industrial Opportunities Limited, Homewell, Havant, Hampshire, PO9 1EF, United Kingdom. Also, certain commercially-available pipette tips have metering characteristics which are acceptable for use in apparatus 18. One example of such a tip is the Elkay #000—000—01C tip, manufactured by Elkay Products, Inc., Worcester, Mass.

Carriage 42 is mounted for horizontal movement on two parallel support rods 70. Rods 70 are carried on a pylon 43 attached to the analyzer frame (not shown). A drive means for carriage 42 includes a bidirectional stepper motor 72 (Fig. 3) which is connected to a capstan drive 74. Drive 74 comprises a drum 76; a cable 78 carried on drum 76 is supported on guide pulleys 80 and connected to carriage 42. It will be seen that when motor 72 is driven in a counterclockwise direction, as viewed in Fig. 3, carriage 42 will move to the right (Fig. 2), and conversely, when motor 72 is driven in a clockwise direction, carriage 42 will move to the left. Carriage 42 must be located along a line at four points which include the tip pick-up station, the aspiration station, the metering station and the tip-eject station. Four horizontal-position sensors 86 of a photoelectric type cooperate with a flag 87 on carriage 42 to precisely position the carriage 42 at each of these stations.

Vertical drive 44 comprises a rack 90 which is attached to dispenser head 46. Rack 90 is raised and lowered by means of a pinion 92 driven by a stepper motor 94 mounted on carriage 42. Four vertical-position sensors 96 cooperate with a flag 98 on rack 90 to precisely determine the vertical position of dispenser head 46. Power from a power supply (not shown) is supplied to the sensors 96 and motor 94 through a ribbon cable 100. Similar apparatus for raising and lowering a probe for liquid analysis is disclosed in U.S. Patent Specification No. 3,866,476.

In the operation of metering apparatus 18, dispenser 40 is moved through at least one complete metering cycle for each sample fluid. At the start of the metering cycle, carriage 42 is moved to the tip-eject station to position dispenser 40 over a waste receptable 110 where a metering tip 48 from a previous metering cycle is ejected into the receptable 110 by an ejector (not shown) on head 46. Carriage 42 is then moved by motor 72 to the tip-supply station where dispenser 40 is located directly over a disposable tip 48 in sample tray 20. At the tip-supply station, dispenser 40 is lowered to pick up a tip 48, raised, and moved laterally to the aspiration station. Dispenser 40 is then lowered to locate a tip 48 in a sample cup 19 where is aspirates sufficient sample fluid to perform the number of tests desired. After aspiration and before withdrawal of the tip 48, approximately 10 µl of fluid are dispensed back into cup 19; this primes the dispenser 40 and insures that the first analysis slide will receive a precise amount of fluid. The dispenser 40 is then raised, moved laterally to the metering station where tip 48 is positioned directly over an analysis slide 15; tip 48 is then lowered into a guide 116 (Fig. 2) on distributor 30 which locates the tip 48 in the metering position. Pump 52 is then actuated for a preselected period to meter the desired amount of sample fluid onto the analysis slide 15. Tip 48 remains in the metering position for a predetermined time after pump 52 stops to complete the metering operation; then dispenser 40 is raised to a home position, shown in Fig. 2. In most cases, more than one analysis will be performed per sample fluid. If additional analyses are being performed, the dispenser 40 will be raised after the completion of each metering operation and lowered into the metering position for each new slide.

Metering apparatus 18 is particularly suitable for use with biological fluids, e.g. blood serum having a surface tension which varies between about 0.028 and about 0.075 Newtons/meter and a relative viscosity between about 0.8 and about 3 (compared to distilled water). Apparatus 18 is adapted to dispense these fluids such that the mean metered volume does not vary more than 5% from a selected value, and the precision, expressed as a coefficient of variation, is less than 5%. To achieve these results, metering apparatus 18 preferably has the properties listed below.

1. There should be no separation of the fluid stream during the metering operation. To make sure that separation does not occur, it has been found that tip 48 should be spaced a given distance (a) from slide 15 (See Fig. 4), the distance being preferably between about 0.012 inches (0.030 cm) and about 0.060 inches (0.15 cm).

2. It is also preferred that the fluid be expelled from tip 48 at a substantially constant dispense rate which is between about 10 µl/sec and about 300 µl/sec. If the dispense rate is too slow, there is danger of separation of the fluid stream, even with proper spacing a of tip 48 from slide 15; if the rate is too fast, fluid tends to build up around tip 48. A representative rate within this range is 50 µl/sec, which can be used regardless of the type or chemistry of the slide onto which the fluid is being metered. That is, this fixed, predetermined rate has been used both on colorimetric type slides, e.g. glucose, BUN, or a like assay, as well as on potentiometric slides, e.g. a $NA^+$ assay.

3. At the completion of the dispensing of fluid, i.e. after pump 52 has stopped, it is preferred that tip 48 dwell in the metering position (Fig. 4) for a predetermined time which is between about 0.05 second and about 0.5 second before being withdrawn. This insures that there will be a clean break of the stream of fluid upon withdrawal; if the tip dwells for a greater period of time, fluid may be pulled out of tip 48 by the slide.

4. After the dwell time as noted above, it is preferred that tip 48 be withdrawn from the metering position at a controlled rate of between about 0.2 inches/sec (0.5 cm/sec) and about 2 inches/sec (5.08 cm/sec). The tip 48 is withdrawn at a relatively slow rate to allow a "fluid wipe-off" effect.

In the use of the disclosed metering apparatus with a high-throughput analyzer, as shown in Fig. 1, a metering operation takes place approximately every 12 seconds. Thus, it will be seen that each of the steps in the metering cycle must be carefully controlled and monitored, and metering apparatus 18 must function in timed relation to other elements of analyzer 12. Pressure transducer 56 is used to monitor the performance of apparatus 18. Pressure is sensed in line 50, and if conditions are present such as a plugged tip 48, no fluid in cup 19, or a separation of the fluid stream between the tip 48 and the slide 15, such condition(s) will be detected by the transducer. A control system (not shown) for metering apparatus 18 could include one or more computers which may take any of the various forms known in the art that include programmable microcomputers. The instructions and method of programming such computers are well known in the art, and thus, no further explanation is considered necessary.

## Claims

1. Metering apparatus for precisely metering a predetermined quantity of a biological fluid onto a plurality of generally planar analysis slides (15) sequentially moved into a metering station said slides (15) being selected from more than one type, different types having different rates of fluid absorption, said apparatus comprising dispenser means (40) including a metering tip (48) having a fluid chamber (49) for receiving biological fluid, pump means (50, 52, 54) in fluid communication with said metering tip (48), said pump means (50, 52, 54) being actuable for a preselected period to expel a portion of the fluid received by said tip (48) through an aperture in said tip at a substantially constant dispense rate, and positioning means (42, 72, 74, 44) operatively connected to said dispenser means (40) for moving said tip (48) to a metering position adjacent to a slide (15), characterized in that said tip (48) comprises an aperture through which the biological fluid is aspirated, said positioning means (42, 72, 74, 44) is adapted to space said tip (48) a given distance (a) from the slide such that fluid delivered at said dispense rate will flow in a continuous stream to said slide, said positioning means being adapted to withdraw said tip at a controlled rate from said metering position a predetermined time after said period.

2. Metering apparatus according to Claim 1 characterized in that said dispense rate is between about 10 µl/sec and about 300 µl/sec.

3. Metering apparatus according to Claim 1 or 2 characterized in that said distance is between about 0.030 cm and about 0.15 cm.

4. Metering apparatus according to any one of Claims 1—3, characterized in that said time is between about 0.05 second and about 0.5 second.

5. Metering apparatus according to any one of Claims 1—4, characterized in that said controlled rate is between about 0.5 cm/sec and about 5.08 cm/sec.

6. Metering apparatus according to any one of Claims 1—5, characterized in that said quantity of fluid is about 10 µl.

7. Metering apparatus according to any one of the preceding claims, characterized in that said fluid has a surface tension within the range from between 0.028 and 0.075 Newtons/meter.

8. Metering apparatus according to any one of the preceding claims characterized in that said positioning means (42, 72, 74, 44) comprises means (42, 72, 74) for moving said dispenser means (40) laterally through a plurality of stations and drive means (44) for raising and lowering said dispenser means (40) at each of said stations.

9. Metering apparatus according to Claim 8, characterized in that said dispenser means (40) comprises a dispenser head (46) for receiving said tip (48), and a pressure detecting means (56) in fluid communication with said tip (48) is operatively connected to said dispenser head (46).

10. Metering apparatus according to Claim 8 or 9, characterized in that said pump means (50, 52, 54) comprises a positive displacement pump (52) and a stepper motor (54) for driving said pump.

11. Metering apparatus according to Claims 8—10, characterized in that said means (42, 72, 74) for moving said dispenser means laterally comprises a carriage (42) and a capstan drive (74) connected to said carriage.

12. Metering apparatus according to Claims 8—11, characterized in that said drive means (44) comprises a rack (90) and pinion (92) operatively connected to said dispenser means (40).

13. A process for the precise metering of a portion of a biological fluid from a metering tip (48) onto a generally planar analysis slide (15) the tip being positioned in a metering position closely adjacent the slide, said process being characterized by: aspirating the fluid into said tip until the tip is partially filled with fluid and has an air space above the fluid,

selecting a space between the tip (48) and the analysis slide (15) of between about 0.030 cm and about 0.15 cm,

pressurizing the fluid in the tip for a preselected period to force about 10 µl of fluid onto the slide at a fixed, predetermined dispense rate of between about 33 µl/sec and about 300 µl/sec, and

maintaining said tip in the metering position between about 0.05 second and about 0.5 second after said period and then withdrawing the tip from said metering position.

14. A process according to Claim 13, characterized in that said tip is withdrawn from the metering position at the rate of between about 0.5 cm/sec and about 5.08 cm/sec.

## Revendications

1. Appareil de mesurage pour doser précisément une quantité prédéterminée d'un fluide biologique déposé sur des plaquettes d'analyse généralement planes (15) qui se déplacent séquentiellement dans un poste de mesurage, et qui sont choisies parmi plus d'un type, où différents types présentent des rythmes d'absorption de fluide différents, cet appareil comprenant des moyens répartiteurs (40) dont font partie un embout de mesurage (48) présentant une chambre à fluide (49) pour recevoir un fluide biologique, des moyens de pompage (50, 52, 54) qui sont en communication fluidique avec cet embout de mesurage (48), et qui sont aptes à être mis en action pour une durée pré-choisie de manière à expulser à un rythme pratiquement constant une partie du fluide reçu dans cet embout (48) au travers d'un orifice qui y est ménagé, et des moyens de positionnement, (42, 72, 74, 44), qui sont reliés fonctionnellement à ces moyens répartiteurs (40) pour placer cet embout (48) dans un poste de mesurage voisin d'une plaquette (15), et étant caractérisé en ce que cet embout (48) comprend un orifice au travers duquel le fluide biologique est aspiré, ces moyens de positionnement (42, 72, 74, 44) sont conçus pour séparer cet embout (48) d'une distance déterminée (a) de la plaquette de manière que le fluide délivré à ce rythme s'écoule en un courant continu vers cette plaquette, ces moyens de positionnement étant adaptés pour retirer à un rythme maîtrisé cet embout de cette position de mesurage après un temps prédéterminé suivant cette durée.

2. Appareil de mesurage conforme à la revendication 1 caractérisé en ce que ce rythme d'expulsion est compris entre environ 10 µl/s et environ 300 µl/s.

3. Appareil de mesurage conforme à la revendication 1 ou 2 caractérisé en ce que cette distance est comprise entre environ 0,3 mm et environ 1,5 mm.

4. Appareil de mesurage conforme à l'une quelconque des revendications 1—3 caractérisé en ce que cette durée est comprise entre environ 0,05 s et environ 0,5 s.

5. Appareil de mesurage conforme à l'une quelconque des revendications 1—4, caractérisé en ce que ce rythme maîtrisé est compris entre environ 0,5 cm/s et environ 5,08 cm/s.

6. Appareil de mesurage conforme à l'une quelconque des revendications 1—5, caractérisé en ce que cette quantité de fluide est d'environ 10 µl.

7. Appareil de mesurage conforme à l'une quelconque des revendications précédentes, caractérisé en ce que ce fluide a une tension superficielle dans l'intervalle de environ 0,028 et 0,075 N/m.

8. Appareil de mesurage conforme à l'une quelconque des revendications précédentes caractérisé en ce que ces moyens de positionnement (42, 72, 74, 44) comprennent des moyens (42, 72, 74) pour déplacer ces moyens répartiteurs (40) lastéralement au travers de plusieurs postes et des moyens entraîneurs (44) pour lever et abaisser ces moyens répartiteur (40) à chacun de ces postes.

9. Appareil de mesurage conforme à la revendication 8 caractérisé en ce que ces moyens répartiteurs (40) comprennent une tête distributrice (46) pour recevoir cet embout (48) et des moyens détecteurs de pression (56) qui sont en communication fluidique avec cet embout (48) et qui sont en relation fonctionnelle avec cette tête distributrice (46).

10. Appareil de mesurage conforme à la revendication 8 ou 9 caractérisé en ce que ces moyens de pompage (50, 52, 54) comprennent une pompe à déplacement desmodromique (52) et un moteur pas à pas (54) pour entraîner cette pompe.

11. Appareil de mesurage conforme aux revendications 8—10 caractérisé en ce que ces moyens (42, 72, 74) pour déplacer latéralement ces moyens répartiteurs comprennent un chariot (42) et un entraînement à cabestan (74) relié à ce chariot.

12. Appareil conforme aux revendications 8—11 caractérisé en ce que ces moyens entraîneurs (44) comprennent une crémaillère (90) et un pignon (92) reliés fontionnellement à ces moyens répartiteurs (40).

13. Procédé pour le dosage précis d'une partie d'un fluide biologique qui est contenu dans un embout de mesurage (48) et qui est déposé sur une plaquette d'analyse généralement plane (15), où cet embout ést placé dans un poste de mesurage à proximité immédiate de la plaquette, ce procédé étant caractérisé en ce qu'on aspire le fluide dans cet embout jusqu'à ce que ce dernièr est partiellement plein de fluide et qu'un espace d'air se trouve au dessus de ce dernier,

on choisit une distance entre l'embout (48) et la plaquette d'analyse (15) comprise entre environ 0,3 mm et environ 1,5 mm.

on met sous pression le fluide dans l'embout pour une durée prédéterminée de manière à expulser environ 10 µl de fluide sur la plaquette à un rythme constant prédéterminé compris entre environ 33 µl/s environ et 300 µl/s environ, et.

on maintient cet embout dans la position de mesurage entre environ 0,05 s et environ 0,5 s après cette durée et alors on retire cet embout de ce poste de mesurage.

14. Procédé conforme à la revendication 13, caractérisé en ce que cet embout est retiré de la position de mesurage à un rythme compris entre environ 5 mm/s et environ 5,08 cm/s.

**Patentansprüche**

1. Vorrichtung zum genau dosierten Aufbringen einer vorbestimmten Menge einer biologischen Flüssigkeit auf mehrere im allgemeinen flache Analyseplättchen (15), die nacheinander einer Dosierstation zugeführt werden, wobei es sich um verschiedene Arten von Analyseplättchen (15) handelt, die die Flüssigkeit unterschiedlich schnell absorbieren, und wobei die Vorrichtung eine Applikatoreinheit (40) mit einer eine Flüssigkeitskammer (49) zur Aufnahme der biologischen Flüssigkeit umfassenden Pipettenspitze (48) enthält, eine mit der Pipettenspitze (48) in Strömungsverbindung stehende Pumpeinrichtung (50, 52, 54) besitzt, die eine vorbestimmte Zeit lang betätigbar ist und dabei einen Teil der von der Pipettenspitze (48) aufgenommenen Flüssigkeit durch eine Öffnung in der Pipettenspitze mit einer im weséntlichen konstanten Abgabeschwindigkeit herauspumpt, sowie Positioniermittel (42, 72, 74, 44) umfaßt, die mit der Applikatoreinheit (40) in Wirkverbindung stehen, um die Pipettenspitze (48) in eine Dosierstellung neben einem Analyseplättchen (15) zu bewegen, dadurch gekennzeichnet, daß die Pipettenspitze (48) eine Öffnung besitzt, durch welche die biologische Flüssigkeit angesaugt wird, daß die Positioniermittel (42, 72, 74, 44) die Pipettenspitze (48) in einem vorbestimmten Abstand (a) zu dem Plättchen halten können, so daß die mit dieser Abgabegeschwindigkeit transportierte Flüssigkeit in einem kontinuierlichen Strom zu dem Analyseplättchen fließt, und daß die Positioniermittel die Pipettenspitze mit gesteuerter Geschwindigkeit in einer vorbestimmten Zeit nach Beendigung der Flüssigkeitsabgabe aus der Dosierstellung entfernen.

2. Dosiervorrichtung nach Anspruch 1, dadurch gekennzeichnet, daß die Abgabegeschwindigkeit etwa 10 µl/s bis etwa 300 µl/s beträgt.

3. Dosiervorrichtung nach Anspruch 1 oder 2, dadurch gekennzeichnet, daß der vorbestimmte Abstand etwa 0,03 cm bis etwa 0,15 cm beträgt.

4. Dosiervorrichtung nach einem der Ansprüche 1 bis 3, dadurch gekennzeichnet, daß die vorbestimmte Zeit etwa 0,05 s bis etwa 0,5 s beträgt.

5. Dosiervorrichtung nach einem der Ansprüche 1 bis 4, dadurch gekennzeichnet, daß die kontrollierte Geschwindigkeit etwa 0,5 cm/s bis etwa 5,08 cm/s beträgt.

6. Dosiervorrichtung nach einem der Ansprüche 1 bis 5, dadurch gekennzeichnet, daß die Flüssigkeitsmenge etwa 10 µl beträgt.

7. Dosiervorrichtung nach einem der vorhergehenden Ansprüche, dadurch gekennzeichnet, daß die Flüssigkeit eine Oberflächenspannung von 0,028 bis 0,075 Newton/m hat.

8. Dosiervorrichtung nach einem der vorhergehenden Ansprüche, dadurch gekennzeichnet, daß die Positioniermittel (42, 72, 74, 44) Mittel (42, 72, 74) enthalten, welche die Applikatoreinheit (40) seitlich durch mehrere Stationen bewegen, sowie eine Antriebseinrichtung (44) zum Heben und Senken der Applikatoreinheit (40) in jeder Station.

9. Dosiervorrichtung nach Anspruch 8, dadurch gekennzeichnet, daß die Applikatoreinheit (40) einen Applikatorkopf (46) zur Aufnahme der Pipettenspitze (48) enthält, und daß eine mit der Pipettenspitze (48) in Strömungsverbindung stehende Druckerkennungseinrichtung (56) in Wirkverbindung mit dem Applikatorkopf (46) steht.

10. Dosiervorrichtung nach Anspruch 8 oder 9, dadurch gekennzeichnet, daß die Pumpeinrichtung (50, 52, 54) eine Verdrängungspumpe (52) und einen Schrittmotor (54) zum Antreiben dieser Pumpe umfaßt.

11. Dosiervorrichtung nach Anspruch 8 bis 10, dadurch gekennzeichnet, daß die Mittel (42, 72, 74) zum seitlichen Bewegen der Applikatoreinheit einen Schlitten (42) sowie damit verbundene Antriebsmittel (74) besitzen.

12. Dosiervorrichtung nach Anspruch 8 bis 11, dadurch gekennzeichnet, daß die Antriebseinrichtung (44) eine Zahnstange (90) und ein Ritzel (92) besitzt, die mit der Applikatoreinheit (40) in Wirkverbindung stehen.

13. Verfahren zum genau dosierten Aufbringen eines Teils einer biologischen Flüssigkeit von einer Pipettenspitze (48) auf ein im allgemeinen flaches Analyseplättchen (15), wobei sich die Pipettenspitze in einer Dosierstellung direkt neben dem Plättchen befindet, dadurch gekennzeichnet, daß Flüssigkeit in die Pipettenspitze gesaugt wird, bis die Pipettenspitze teilweise mit Flüssigkeit gefüllt ist und sich über der Flüssigkeit ein Luftspalt befindet, daß zwischen der Pipettenspitze (48) und dem Analyseplättchen (15) ein Spalt von etwa 0,03 cm bis etwa 0,15 cm gewählt ist, daß die Flüssigkeit in der Pipettenspitze eine vorbestimmte Zeit lang unter Druck gesetzt wird, um etwa 10 µl Flüssigkeit mit einer festen, vorbestimmten Abgabegeschwindigkeit von etwa 33 µl/s bis etwa 300 µl/s auf das Plättchen aufzubringen, und daß nach diesem Zeitraum die Pipettenspitze noch etwa 0,05 s bis etwa 0,5 s in der Dosierstellung gehalten und dann aus der Dosierstellung entfernt wird.

14. Verfahren nach Anspruch 13, dadurch gekennzeichnet, daß die Pipettenspitze mit einer Geschwindigkeit von etwa 0,5 cm/s bis etwa 5,08 cm/s aus der Dosierstellung entfernt wird.

FIG. 1

0 042 337

FIG. 2

FIG. 3

FIG. 4